# EUROPEAN PATENT APPLICATION

(11) **EP 1 571 464 A2**
(43) Date of publication of application: **07.09.2005**
(21) Application number: 05004648.1
(22) Date of filing: 03.03.2005
(51) Int. Cl.: G01V 15/00

(54) **Magnetic marker for use in product authentication, and detector for reading the marker**

(30) Priority: 05.03.2004 GB 0404933
(71) Applicant: A.C.S. Advanced Coding Systems Ltd., Even Yehuda 40500 (IL)
(72) Inventor: Sorkine, Evgeni, Tel Aviv 69395 (IL)
(74) Representative: Modiano, Guido

(57) **Abstract**

A magnetic tag (101) is presented, as well as a method for manufacturing such a tag and a detector device (120) and method for use in product authentication. The tag (101) comprises a soft magnetic unit (102) and a hard magnetic unit (104) in its non-magnetized state both carried by a substrate (106). The soft magnetic unit (102) includes at least one glass-coated amorphous microwire (1) characterized by a large Barkhausen discontinuity and a zero or positive magnetostriction. The hard magnetic unit (104) includes at least one strip-like element (33) of a thickness substantially not exceeding a few tens of microns printed onto the substrate (106) so as to extend along an axis parallel to the microwire (1). The hard magnetic material has coercivity substantially higher than 1000Oe. The hard magnetic unit (104) is thus such that, once magnetized, in order to be de-magnetized needs to be subjected to more than a single pulse of an alternating magnetic field of intensity varying from that of at least 250% of the coercive force value of the hard magnetic material to zero.

## Description

### FIELD OF THE INVENTION

This invention relates to a magnetic marker, particularly useful for product authentication purposes, and a detector for use with this marker.

### BACKGROUND OF THE INVENTION

Identifying of the originality of products is very important in production and distribution of various products. Considerable efforts have been undertaken throughout the world in the field of protecting the authenticity of goods.

It is known to use optical means, such as special printing and holograms, for product authentication purposes. The problem with such optical means is associated with the fact that printed authentication optical tags can easily be counterfeited, while the holograms authenticity of holograms can be verified only by means of special optical equipment. Additionally, optical means are very sensitive to environmental conditions, such as dirt, humidity, as well as mechanical wear.

Magnetic identification means are also widely used, in particular, in anti-shoplifting systems, called electronic article surveillance (EAS) systems. EAS markers made of soft magnetic amorphous alloy ribbons are disclosed for example in U.S. Patent No. 4,484,184. The commonly accepted shape of such a marker is that of an elongated strip. Magnetic EAS markers are rather robust and flexible. Also, they are mostly provided with deactivation elements made of semi-hard magnetic materials.

US Patent No. 4,960,651 discloses magnetic devices which include an article comprising a substrate and a thin coating (not greater than 6 microns in thickness) of a magnetic material. The substrate is a flexible, laminar material. The magnetic material is an amorphous metal glass of high intrinsic magnetic permeability, with low or substantially zero magnetostriction, and with low coercivity. This article can be used as, or to make, an antipilferage tag or marker. Deactivation materials and configurations are also disclosed, as well as techniques, in particular sputtering or PVD, for producing such a tag.

U.S. Patent No. 5,582,924 discloses a tag or marker which comprises a substrate; an 'active' magnetic material which is a soft magnetic material having a high magnetic permeability and a low coercive force; and a deactivating material which is a hard or semi-hard magnetic material having a moderate or high coercive force and a moderate magnetic permeability. The deactivating material, when subjected to a sufficiently high magnetizing force, is able to clamp the magnetic properties of the 'active' material so as to deactivate the 'active' material. The deactivating material in the tag or marker is electrodeposited nickel with a planar crystal grain structure.

U.S. Patent No. 6,538,572 discloses the use of a paintable or printable bias magnet material instead of the conventional bias magnets in EAS markers. This material is either directly painted onto the EAS marker or first placed onto a substrate material, which is then placed into the EAS marker. The material includes a magnetic powder mixed with resin and solvent. This "bias paint" is then applied onto the EAS marker. The magnetic powder, resin, and solvent provide a very dense layer after drying, which has a magnetic material density that is usually lower than a rolled product, but is higher than that of the injection-molded magnet material. Printing the bias magnet allows nondeactivatable magnetomechanical EAS markers to be made using web-based mass production methods.

It is often the case that a magnetic marker that can be effectively used in an EAS system is not suitable for authentication purposes. This is because EAS techniques simply require the detection of presence of some magnetic element, while authentication requires distinguishing this magnetic element from other magnetic elements. For example, an amorphous ribbon based EAS marker is not convenient for article authentication, because of amorphous ribbon availability on the market and possible counterfeit. Additionally, the amorphous strip marker is typically characterized by the minimum strip width of about 0.5mm, and therefore it is difficult to conceal the magnetic element of the marker. Another problem with the conventional EAS markers is that their deactivating element can be easily reactivated thus enabling the repeated use of the protected item.

U.S. Patent No. 6,556,139, assigned to the assignee of the present application, discloses a magnetic tag for use with various kinds of products for the product authentication purposes. The tag is characterized by its unique response to an external alternating magnetic field. The tag utilizes at least one magnetic element formed of a glass-coated amorphous magnetic microwire characterized by a large Barkhausen discontinuity and a zero or positive magnetostriction. Such a microwire is therefore characterized by fast re-magnetization, and, when located in a region of an alternating magnetic field, produces short pulses of the field perturbations.

### SUMMARY OF THE INVENTION

There is a need in the art to improve the item (product) authentication, by providing a novel magnetic tag configured to allow disabling (destroying) the authentication feature of a tag, after the tag has been read (i.e., the product has been found to be authentic). This is aimed at eliminating the fraud by repeated use of the item, and is particularly useful for example when authenticating of food stamps, transportation tickets, tickets for shows, theatre, sports games, and so on, as well emptied bottles and cans due to deposit money return.

The present invention solves the above problem by providing a novel magnetic tag configured to be activated and, once deactivated (while being read for authenticating a product with which the tag is associated), cannot be reactivated in a conventional way. The magnetic authentication tag of the present invention has a simple and not expensive construction, and may also carry a certain amount of additional information about the product.

In accordance with the invention, the deactivatable magnetic authentication tag utilizes a soft magnetic unit and a hard magnetic unit. Here, the term *"deactivatable tag"* actually signifies a tag which is hard to return from its deactivated state to its active state, namely a tag which in order to be returned into its active state needs much more complicate magnetic field treatment to be applied to the tag.

The soft magnetic unit includes at least one glass-coated amorphous magnetic microwire characterized by a large Barkhausen discontinuity and a zero or positive magnetostriction (as disclosed in the above indicated U.S. Patent No. 6,556,139 assigned to the assignee of the present application). Such a microwire is therefore characterized by fast re-magnetization (unique re-magnetization peak width), and thus when located in a region of an alternating magnetic field, produces short pulses of the field perturbations. If a plurality of the microwires is used, the microwires are arranged in a spaced-apart parallel relationship extending across the entire tag length or a part of it.

The hard magnetic unit may comprise a single hard magnetic element (strip), but preferably includes an array of hard magnetic elements (strip segments) arranged in a spaced-apart relationship along an axis parallel to the microwire (microwires). The hard magnetic unit (presenting continuous deactivator or deactivator pattern) is made from a magnetic paint of high coercivity such that it after being shifted from its initial non-magnetized state to a magnetized state cannot be easily returned to the non-magnetized state. When the hard magnetic unit is magnetized (i.e., the tag is de-activated), the characteristic microwire response is totally suppressed due to saturation. When the hard magnetic unit is non-magnetized (i.e., the tag is active), the response of the soft magnetic unit can be detected.

The use of the glass-coated amorphous microwire(s) as a soft magnetic unit allows for making the hard magnetic strip very thin, thus allowing for using non-expensive printing techniques for producing the hard magnetic unit of the tag. More specifically, in the conventional EAS markers, utilizing a soft magnetic strip and a bias-element magnetic strip, the thickness of the bias element is typically at least 0.2-0.3mm, as disclosed in the above-indicated U.S. Patent No. 6,538,572. Hence, conventional printing techniques can hardly be used for manufacturing the bias element. On the contrary, the technique of the present invention requires the thickness of the hard magnetic unit to be about 20-30µm because the metal core diameter of the microwire is about 15-20µm.

Thus, according to one broad aspect of the present invention, there is provided a magnetic tag for attaching to or incorporating within a product to enable authentication of the product, the tag comprising a substrate carrying a soft magnetic unit including at least one glass-coated amorphous microwire characterized by a large Barkhausen discontinuity and a zero or positive magnetostriction, and a hard magnetic unit including at least one strip-like element in its non-magnetized state extending along an axis substantially parallel to the microwire, the magnetic tag being characterized in that a hard magnetic material is printed onto the substrate to form said at least one strip-like element of a thickness substantially not exceeding a few tens of microns, and the hard magnetic material has coercivity substantially higher than 1000Oe, the hard magnetic unit thus being such that, once magnetized, in order to be de-magnetized needs to be subjected to more than a single pulse of an alternating magnetic field of intensity varying from that of at least 250% of the coercive force value of the hard magnetic material to zero.

Hence, the normally active magnetic tag (i.e., with the hard magnetic unit in its non-magnetized state), after being read once (by detecting the response of the soft magnetic unit to an interrogating field) can be immediately deactivated (by shifting the hard magnetic unit from its initial non-magnetized state to the magnetized state), thereby impeding further reactivation of the tag. Practically, the AC magnetic field capable of de-magnetizing the previously magnetized hard magnetic unit should be at least 250% of the coercivity force of the hard magnetic material (e.g., for the hard magnetic material having coercivity of 1000Oe, such a filed should be of at least 2500Oe).

According to another aspect of the invention, there is provided a method of manufacturing a magnetic tag to be used with a product to enable authentication of the product, the method comprising:
providing at least one glass-coated amorphous microwire characterized by a large Barkhausen discontinuity and a zero or positive magnetostriction, to form a soft magnetic unit on a substrate,
selecting a hard magnetic material of a coercivity substantially higher than 1000Oe, and printing the hard magnetic material in its non-magnetized state on the substrate to form a hard magnetic unit including at least one strip-like element of a thickness substantially not exceeding a few tens of microns and extending along an axis parallel to the microwire, the hard magnetic unit thus being such that, once magnetized, in order to be de-magnetized needs to be subjected to more than a single pulse of an alternating magnetic field of intensity varying from that of at least 250% of the coercive force value of the hard magnetic material to zero.

According to yet another broad aspect of the invention, there is provided a detector device for use in a product authentication, the detector being configured for detecting a magnetic tag, having a soft magnetic unit and a hard magnetic unit in its non-magnetized state, the detector device comprising:
- a source of a first interrogating magnetic field operable to create the alternating magnetic field in an interrogation zone to affect said at least one microwire to produce a response to the first interrogating field;
- a receiver for receiving the response of the soft magnetic unit and generating a signal indicative thereof;
- a signal processing utility for receiving said signal, determining whether said signal satisfies a predetermined condition, and generating an output signal indicative thereof;
- a tag deactivating assembly configured for generating a second magnetic field to thereby magnetize the hard magnetic unit of the tag; and
- an actuator responsive to said output signal to operate the tag deactivating assembly, to thereby magnetize the hard magnetic unit immediately after the generation of said output signal.

According to yet another aspect of the invention, there is provided a method for use in product authentication, the product carrying a magnetic tag that has a soft magnetic unit and a hard magnetic unit in its non-magnetized state, the method comprising:
- subjecting the product to a first interrogating magnetic field to thereby activate the soft magnetic unit to produce a response to the field; detecting the response; processing data indicative of the response and upon determining that said data satisfies a predetermined condition, generating an output signal indicative thereof;
- in response to said output signal, subjecting the product to a second magnetic field to magnetize the hard magnetic unit of the tag, thereby significantly impeding further de-magnetization of the hard magnetic unit.

### BRIEF DESCRIPTION OF THE DRAWINGS

In order to understand the invention and to see how it may be carried out in practice, preferred embodiments will now be described, by way of nonlimiting examples only, with reference to the accompanying drawings, in which:
**Fig. 1** is a schematic illustration (with portions broken away) of a magnetic authentication tag of the present invention;
**Fig. 2** is a schematic illustration of a known glass-coated microwire that is suitable to be used in a magnetic tag of the present invention;
**Fig. 3** exemplifies the hysteresis loop characteristic of the glass-coated amorphous microwire of Fig. 2, for the microwire having a magnetic core made of cobalt-based alloy with zero magnetostriction;
**Figs. 4A to 4C** illustrate differences in re-magnetization processes in magnetic elements of markers made of a glass-coated microwire used in the present invention, an in-water cast amorphous wire, and an amorphous strip;
**Fig. 5** more specifically illustrates the configuration of soft and hard magnetic units of the tag of Fig. 1; and
**Fig. 6** exemplifies a detector unit according to the invention for reading (detecting) a magnetic tag.

### DETAILED DESCRIPTION OF THE INVENTION

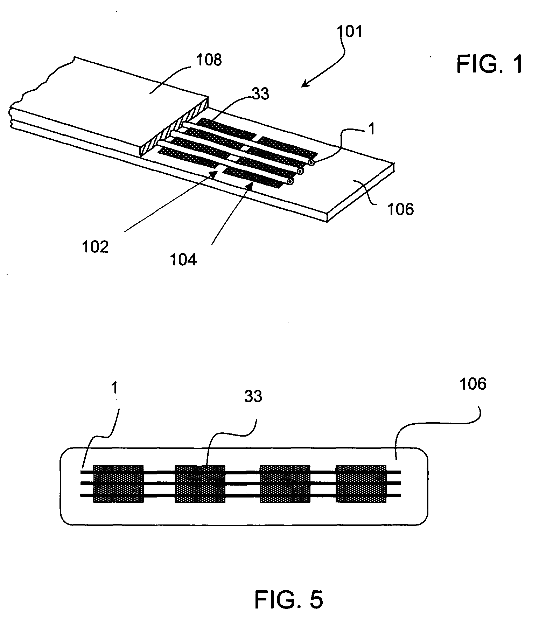

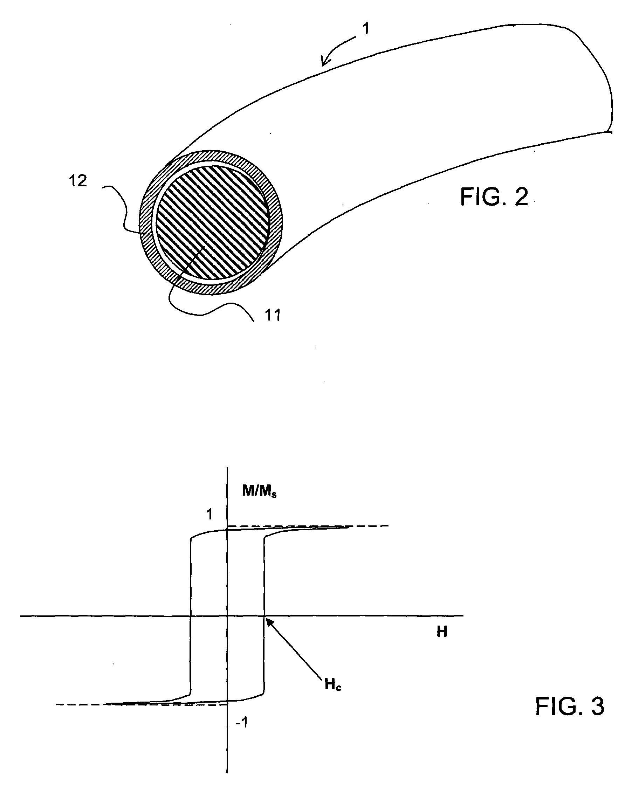

Referring to **Fig. 1,** there is schematically illustrated an authentication tag **101** constructed and operated according to the present invention. The tag **101** includes a soft magnetic unit **102** and a hard magnetic unit (deactivator) **104** located on a substrate **106.** The soft magnetic unit **102** includes at least one magnetic amorphous glass-coated microwire **1** characterized by a large Barkhausen discontinuity and zero or positive magnetostriction - three such microwires being shown in the present example, arranged in a parallel spaced-apart relationship, each extending along the entire tag or a part thereof. Such a glass-coated microwire is disclosed in U.S. Patent No. 6,556,139, assigned to the assignee of the present application. The configuration of this microwire and its advantageous features will be described more specifically further below with reference to Figs. 2, 3 and 4A-4C.

The hard magnetic unit **104** is located on the substrate extending along an axis substantially parallel to the soft magnetic unit. The hard magnetic unit **104** includes at least one strip-like hard magnetic element **33 -** an array of three such spaced-apart hard magnetic elements **33** being shown in the present example, with each of the hard magnetic elements **33** overlapping a region across all the microwires **1.** The hard magnetic elements are made of a high coercivity magnetic material printable on the substrate. The hard magnetic material has coercivity substantially higher than 1000 Oersteds, practically at least 2000 Oersteds. The thickness of the hard magnetic element suitable for the purposes of the present invention is about 20-30 micrometers, and the hard magnetic element can therefore be printable on the substrate.

In the present example, the hard magnetic elements **33** are printed on the substrate **106,** and the microwire pieces **1** are sandwiched between the substrate **106** with the printed hard magnetic elements and an overlayer **108** of the tag. The external surface of the substrate **106** may be coated with a suitable adhesive material to secure the tag **101** to an article (product) which is to be protected for authentication purposes. The overlayer **108** may be used, for example, for printing a barcode label thereon.

**Fig. 2** more specifically illustrates the glass-coated microwire **1** suitable to be used in the soft magnetic unit **102** of the magnetic tag of the present invention. The microwire is composed of an amorphous metal core **11** and a glass coat **12.** The glass-coated microwire **1** can be produced with a very small diameter ranging from 1-2 micrometers to tens of micrometers (e.g., 15-20 micrometers), from a variety of magnetic and non-magnetic alloys and pure metals. The amorphous magnetic glass-coated microwire is characterized by good mechanical strength, flexibility, and corrosion resistance, so that they can be easily incorporated in paper, plastic, fabrics and other substrate materials.

Amorphous magnetic glass-coated microwires are characterized by a unique response to an interrogating magnetic field *("High Frequency Properties of Glass* *Coated Microwire* ", A.N. Antonenko, E. Sorkine, A. Rubshtein, V.S. Larin and V. Manov, Journal of Applied Physics, Vol. 83, No. 11, 1998, pp. 6587-6589).. The microwire properties can be controlled by varying the alloy composition and the glass-to-metal diameter ratio. Particularly, the microwires that are cast from alloys with zero or positive magnetostriction are characterized by a large Barkhausen discontinuity, and can advantageously be used for product authentication purposes (US 6,556,139) due to their unique property of re-magnetization in an external alternating magnetic field, namely, unique re-magnetization peak width, resulting in a short response pulse of the microwire to the external field. To this end, a Co-based or Fe-based alloy can be used, for example, one of the following: an alloy containing 77.5% Co, 4.5% Fe, 12% Si, and 6% B by atomic percentage, an alloy containing 68.6% Co, 4.2% Fe, 12.6% Si, 11% B, 3.52% Cr and 0.08% Mo by atomic percentage, or an alloy containing 60% Fe, 15% Co, 15% Si and 10% B.

**Fig. 3** shows an example of the hysteresis loop measured in a sample (glass-coated microwire) prepared from the alloy containing 77.5% Co, 4.5% Fe, 12% Si, and 6% B, characterized by zero magnetostriction. The diameter of the inner metal part for this sample is 15-20 micrometers. The total diameter of the microwire sample is 17-22 micrometers. As shown, the microwire sample is characterized by a large Barkhausen discontinuity.

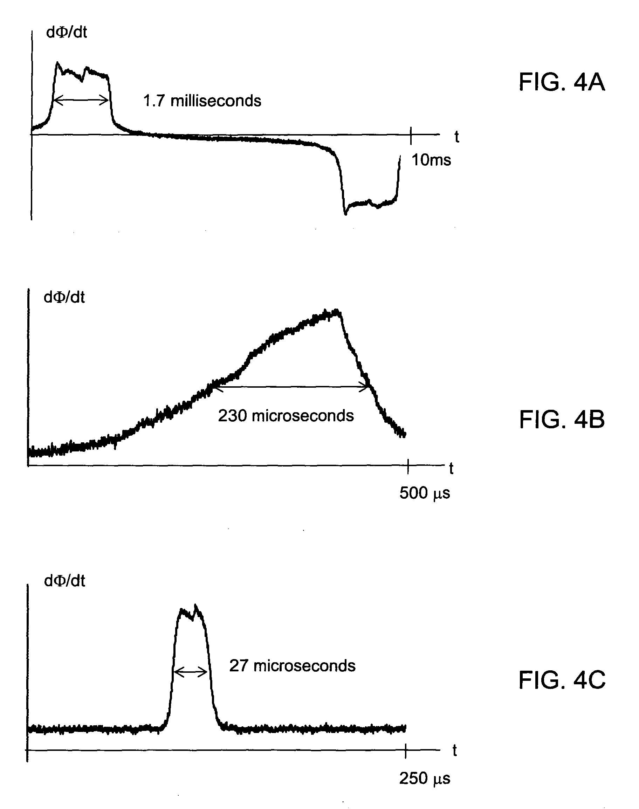

The process of re-magnetization of such a microwire (with zero or positive magnetostriction and a large Barkhausen discontinuity) is faster than that of any other magnetic material. This is illustrated in **Figs. 4A-4C** showing the differences in re-magnetization processes in three samples: amorphous strip (typically used in anti-shoplifting, or EAS markers), an in-water cast amorphous wire (used in the EAS markers commercially available from Sensormatic Co.), and the glass-coated microwire described above. A triangular-waveform AC external field of a rather low frequency (about 100Hz) and small amplitude of approximately 100A/m was applied to the above mentioned samples. The partial waveform graphs are depicted in Figs. 4A-4C. When the field strength achieves the coercive force value **H**_{**c**}**,** then the re-magnetization process starts. The magnetic flux changes give rise to a peak in the flux derivative over time, dΦ/dt (in arbitrary units). Accordingly, a voltage peak is observed in a receiving coil placed in the vicinity of the sample. As shown, the re-magnetization peak width (measured at half amplitude level) is 30 to 100 microseconds for the glass-coated microwire (the solid curve, ***a***). For the markers commercially available from Sensormatic Co. comprising an in-water-cast amorphous wire with large Barkhausen discontinuity, the peak width is 300 to 500 microseconds, and more (the dotted curve, *b*). For amorphous strips typically used in anti-shoplifting markers, like a Meto GmbH 32-mm marker, the peak width is 1-2 milliseconds (the dashed curve, *c*). Other magnetic materials feature much slower re-magnetization process and wider peaks.

Hence, by discriminating the ultimately short re-magnetization peaks of the glass-coated microwire, characterized by zero or positive magnetostriction and a large Barkhausen discontinuity, it is possible to unambiguously detect its presence in an authentication tag.

Turning back to **Fig. 1,** the magnetic tag **101** operates as follows: When the hard magnetic elements are not magnetized (the tag is active), they do not influence the tag response (i.e., the response of the soft magnetic unit **102** to an interrogating magnetic field). When the hard magnetic unit **104** of the tag is magnetized (the tag is deactivated), it brings the microwires **1** to saturation, and the characteristic response of the soft magnetic unit **102** is therefore suppressed.

A product is typically marketed with a tag in its active state (non-magnetized hard magnetic unit), and thus detecting a unique response of the soft magnetic unit allows for authenticating the product.

According to the technique of the present invention, after the product is authenticated, the tag is shifted into its non-active state, in which state the hard magnetic unit is magnetized. The hard magnetic unit used in the tag of the present invention is made of a material with a coercivity significantly higher than 1000 Oersteds, and therefore, when magnetized, cannot be easily (with the conventional means) shifted back into its non-magnetized state. The minimal magnetic field capable of magnetizing the hard magnetic unit (deactivation of the tag) is about 250% of the coercive force value of the hard magnetic material. For the hard magnetic material with a 1000Oe coercivity force, the magnetizing magnetic field should be at least 2500Oe. The magnetization process can easily be implemented using a rare earth magnet or a strong magnetic field pulse (using for example a capacitor discharge through a solenoid coil). As for the demagnetization of such a high-coercivity magnetic material (return of the hard magnetic unit in its non-magnetized state), this would require a complex procedure of subjecting the tag to an alternating magnetic field with varying intensity starting from a very high intensity (at least 250% of the coercivity force value of the material) and fading to zero during a certain time period including several tens of cycles of the alternating magnetic field.

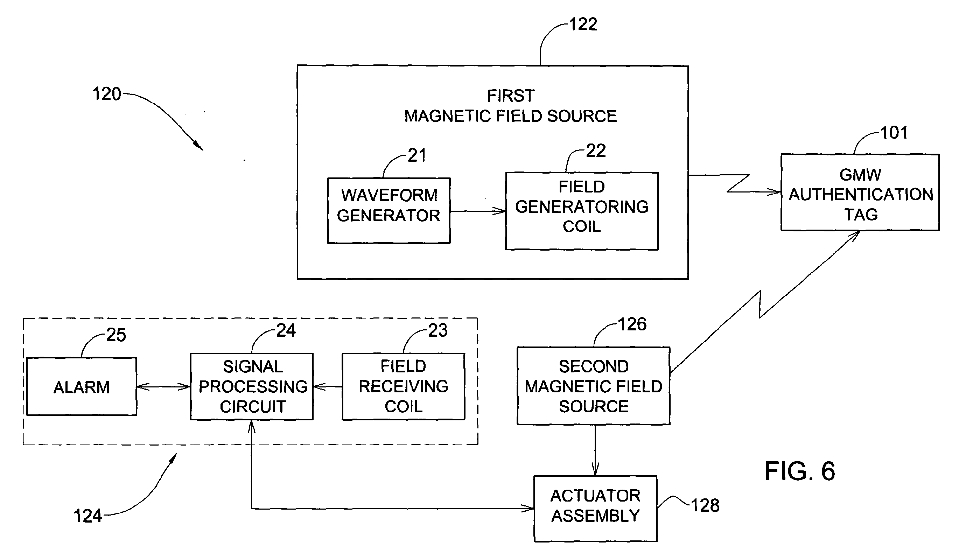

To this end, a detector unit according to the invention is designed to include, in addition to a tag reading assembly, also a tag deactivating assembly (as described above), and an actuator configured to be responsive to the tag reading assembly to detect that the product has been authenticated, to immediately operate the tag deactivating assembly. This will be described below with reference to fig. 6.

By choosing the material of the hard magnetic elements **33** among those known by very high coercive force values (preferably more than 2000 Oersteds), the tag re-activation process becomes very difficult. Indeed, to demagnetize such material, a series of alternating field pulses of initial intensity 250% of the coercive force value of the hard magnetic material and with pulse amplitudes fading to zero should be applied to the tag. Semi-hard magnetic materials typically used as EAS tag deactivation elements have coercive forces of about 40 to 100 Oersteds, and can therefore be easily de-magnetized with commercially available AC electromagnets. However, for a very hard material with more than 1000 Oersteds coercivity, the demagnetization process requires special, very powerful installations that are not available from the shelf.

Such high coercivity hard magnetic materials are known and available in the market. In the bulk form, all the strong magnets are brittle. For this reason, it is impossible to handle these materials in the way similar to that of EAS tag manufacturing (wherein strips of deactivator metal are either cut to pieces or thermally treated in parts, to make an intermittent structure of small magnets along the soft magnetic element).

For the purposes of the present invention, it is advantageous to use the hard magnetic material in a powder form. This powder may be mixed with a lacquer or a paint base material, to form a magnetic paint. Then, the single continuous deactivator or deactivator element pattern **33** may be simply printed on the tag substrate **106,** as it is shown in **Fig. 5.**

The inventors have tried fine powders of iron and cobalt oxides, strontium and barium ferrites, as deactivator materials. In particular, strontium ferrite powder SrFe₁₂O₁₉ was found to give good deactivation performances. The material has the intrinsic coercivity about 4,000 Oersteds. Powder with particle size around 5 microns was mixed with the silkscreen paint base, and a pattern of successive rectangles was printed then on a paper substrate. The rectangles had sizes of 2mm width and 6mm length, with spacing of 2mm between the rectangles. The dry paint layer thickness was about 20microns. After printing, the glass-coated microwires of 20microns core diameter were glued over the deactivator pattern, as is shown in **Fig. 5.**

In the initial state, the deactivator elements are not magnetized due to random orientation of the powder particles. The specific microwire response is not influenced. After the deactivator magnetization by a FeNdB rare earth magnet, the microwire signal was totally suppressed. All attempts to re-activate the "killed" tags with available AC electromagnets were unsuccessful.

**Fig. 6** exemplifies, by way of a block diagram, a detector device **120** according to the invention for use with the magnetic authentication tag **101** of the present invention. The detector device **120** typically includes an interrogating magnetic field source **122,** formed by a waveform generator block **21** and a field generating coil **22,** for creating a first alternating magnetic field in an interrogation zone. This first magnetic field is aimed at reading the tag, namely to cause a response of the soft magnetic unit, and is of about a few Oersteds. Further typically provided in the detector device **120** are: a response receiver unit **124** including a field receiving coil **23;** a signal processing circuit **24** preprogrammed to determine whether the response satisfies a predetermined condition and generate an output signal indicative thereof; and an indicator utility (alarm device) **25.** Considering the use, in the soft magnetic unit, the glass-coated amorphous microwire(s) characterized by a large Barkhausen discontinuity and a zero or positive magnetostriction, the signal processing circuit **24** is of a kind capable of determining a duration of the response pulse and generating the output signal indicative of whether the duration satisfies a predetermined value.

According to the present invention, the detector device **120** further includes a deactivating assembly **126** (including for example a rare earth magnet or a generator of a strong magnetic field pulse as described above); and an actuator **128** interconnected between the output of the signal processing circuit **24** and input of the deactivating assembly **126** to thereby actuate the deactivating assembly immediately after the generation of said output signal (i.e., after the product has been authenticated). It should be understood that the deactivating assembly and/or the actuator may and may not be contained in the same housing as the other elements of the detector device.

When the tag **101** (a product with the tag) is located in the vicinity of the coils **22** and **23** (i.e., in the interrogation zone), the interrogating AC field causes the switching of the microwire pieces magnetization, considering the tag is in its initial active state (non-magnetized hard magnetic unit). Accordingly, very short pulses of magnetic field perturbations are received by the field receiving coil **23.** These pulses are detected by the signal processing circuit **24,** which produces an output to activate the alarm **25** (which may be a buzzer or LED, or both) and to activate the actuator **128,** which operates the deactivating assembly to create a pulse of a high magnetic field and thus shift the hard magnetic unit of the tag into its magnetized state (non-active state of the tag).

For authentication of products of a specific type, the design of coils **22** and 23 may be chosen in accordance with the particular application. For example, these coils may be wound on a ferrite rod, or a ferrite ring with an air gap.

The principle of the microwire detection disclosed herein may be combined with other methods known in the art, for increasing the information quantity contained in the tag. For example, the soft-magnetic unit may include multiple microwire pieces with different coercivities. In this case, several re-magnetization peaks will be detected in each period, and their pattern may be recognized, for example, by methods described in U.S. Patent No. 4,203,544. Different coercivity values of the microwires may be obtained, for example, by varying the iron content in the master alloy composition, and/or the glass coat thickness, as pointed in the above-indicated article of Antonenko et al.

If, in addition, the deactivator pattern (hard magnetic elements) is intentionally made non-uniform, with varying lengths of the printed rectangles, then a certain amount of additional information may be extracted after the deactivator is magnetized. The principle of information reading is similar to that of magnetic bar code readers, which are well known in the art. Alternatively, the spacing between the identical deactivator rectangles may be varied. In this case, the residual signals of the non-saturated microwire parts in these spacings may be successively detected and processed to form a code. The inventors have found that at least a 6-bit code could be read in a tag with 30mm microwire length.

Those skilled in the art will readily appreciate that various modifications and changes can be applied to the invention as hereinbefore exemplified without departing from its scope defined in and by the appended claims.

## Claims

1. A magnetic tag (101) for attaching to or incorporating within a product to enable authentication of the product, the tag comprising a substrate (106) carrying a soft magnetic unit (102) including at least one glass-coated amorphous microwire (1) **characterized by** a large Barkhausen discontinuity and a zero or positive magnetostriction, and a hard magnetic unit (104) extending along an axis substantially parallel to the microwire (1) and including at least one strip-like element (33) in its non-magnetized state, the magnetic tag (101) being **characterized in that** a hard magnetic material is printed onto the substrate to form said at least one strip-like element (33) of a thickness substantially not exceeding a few tens of microns, and the hard magnetic material has coercivity substantially higher than 1000Oe, the hard magnetic unit (104) being thus such that, once magnetized, in order to be de-magnetized needs to be subjected to more than a single pulse of an alternating magnetic field of intensity varying from that of at least 250% of the coercive force value of the hard magnetic material to zero.

2. The magnetic tag of Claim 1, wherein the hard magnetic material coercivity is at least 2000 Oersteds.

3. The magnetic tag of any one of preceding Claims, wherein the hard magnetic material includes at least one of strontium ferrite and barium ferrite powder materials.

4. The magnetic tag of any one of preceding Claims, wherein said at least one microwire is uniquely re-magnetizable by a certain alternating magnetic field to produce at least one short pulse response to the magnetic field.

5. The magnetic tag of any one of preceding Claims, wherein the thickness of the hard magnetic element ranges from a few microns to a few tens of microns.

6. The magnetic tag of any one of preceding Claims, wherein the thickness of the hard magnetic element is about 20-30 microns.

7. The magnetic tag of any one of preceding Claims, wherein said at least one microwire is located on top of said at least one hard magnetic element being fixed thereto.

8. The magnetic tag of any one of Claims 1 to 6, wherein said at least one hard magnetic element is printed into the substrate such that said at least one microwire is located between the substrate and the hard magnetic element.

9. A method of manufacturing a magnetic tag (101) to be used with a product to enable authentication of the product, the method comprising:
providing at least one glass-coated amorphous microwire (1) **characterized by** a large Barkhausen discontinuity and a zero or positive magnetostriction, to form a soft magnetic unit (102) on a substrate (106),
selecting a hard magnetic material of a coercivity substantially higher than 1000Oe, and printing the hard magnetic material, while in its non-magnetized state, on the substrate (106) to form a hard magnetic unit (104) extending along an axis parallel to the microwire (1) and including at least one strip-like element (33) of a thickness substantially not exceeding a few tens of microns, the hard magnetic unit (104) thus being such that, once magnetized, in order to be de-magnetized needs to be subjected to more than a single pulse of an alternating magnetic field of intensity varying from that of at least 250% of the coercive force value of the hard magnetic material to zero.

10. The method of Claim 9, wherein the hard magnetic material coercivity is at least 2000 Oersteds.

11. The method of Claim 9 or 10, wherein the hard magnetic material includes at least one of strontium ferrite and barium ferrite powder materials.

12. The method of any one of Claims 9-11, wherein said at least one microwire is configured so as to be uniquely re-magnetizable by a certain alternating magnetic field to produce at least one short pulse response to the magnetic field.

13. The method of any one of Claims 9-12, wherein the thickness of the hard magnetic element ranges from a few microns to a few tens of microns.

14. The method of any one of Claims 9-13, wherein the thickness of the hard magnetic element is about 20-30 microns.

15. The method of any one of Claims 9-14, wherein said at least one microwire is secured onto the substrate such that it is located on top of said at least one hard magnetic element being fixed thereto.

16. The method of any one of Claims 9-15, wherein said at least one hard magnetic element is printed onto the substrate such that said at least one microwire is located between the substrate and the hard magnetic element.

17. A detector device (120) for use in authentication of a product carrying the magnetic tag (101) of Claim 1 , the detector device (120) comprising:
- a source (122) of a first interrogating magnetic field operable to create the alternating magnetic field in an interrogation zone to re-magnetize said at least one microwire to produce a response to the first interrogating field;
- a receiver (124) for receiving the response of the microwire (1) and generating a signal indicative thereof;
- a signal processing utility (24) for receiving said signal, determining whether said signal corresponds to a predetermined duration of the response pulse of the microwire, and generating an output signal;
- a tag deactivating assembly (126) configured for generating a second magnetic field for magnetizing said at least one hard magnetic element (33) of the tag; and
- an actuator (128) responsive to said output signal to operate the tag deactivating assembly (126), to thereby magnetize the hard magnetic unit (104) immediately after the generation of said output signal.

18. A detector device (120) for use in a product authentication, the detector being configured for detecting a magnetic tag (101), having a soft magnetic unit (102) and a hard magnetic unit (104) in its non-magnetized state, the detector device (120) comprising:
- a source (122) of a first interrogating magnetic field operable to create the alternating magnetic field in an interrogation zone to activate the soft magnetic unit (102) to produce a response to the first interrogating magnetic field;
- a receiver (124) for receiving the response of the soft magnetic unit (102) and generating a signal indicative thereof;
- a signal processing utility (24) for receiving said signal, determining whether said signal satisfies a predetermined condition, and generating an output signal indicative thereof;
- a tag deactivating assembly (126) configured for generating a second magnetic field to thereby magnetize the hard magnetic unit (104) of the tag (101); and
- an actuator (128) responsive to said output signal to operate the tag deactivating assembly (126), to thereby enable to magnetize the hard magnetic unit (104) immediately after the generation of said output signal.

19. A method for use in authentication of a product carrying a magnetic tag that has a soft magnetic unit and a hard magnetic unit in its non-magnetized state, the method comprising:
- subjecting the product to a first interrogating magnetic field to thereby activate the soft magnetic unit to produce a response to the field; detecting the response; processing data indicative of the response and upon determining that said data satisfies a predetermined condition, generating an output signal indicative thereof;
- in response to said output signal, subjecting the product to a second magnetic field to magnetize the hard magnetic unit of the tag, thereby significantly impeding further de-magnetization of the hard magnetic unit.
